Europäisches Patentamt

European Patent Office

Office européen des brevets

(19)

(11) Veröffentlichungsnummer: **0 256 521**
**B1**

(12) **EUROPÄISCHE PATENTSCHRIFT**

(45) Veröffentlichungstag der Patentschrift: **14.11.90**

(21) Anmeldenummer: **87111720.6**

(22) Anmeldetag: **13.08.87**

(60) **Verbunden mit 87905209.0/0324741 (europäische Anmeldenummer/Veröffentlichungsnummer) durch Entscheidung vom 06.02.90.**

(51) Int. Cl.⁵: **C 09 D 4/00, C 08 L 63/00**

(54) **Wässriges Überzugsmittel, Verfahren zu seiner Herstellung sowie seine Verwendung zur Beschichtung von Dosen.**

(30) Priorität: **16.08.86 DE 3627860**

(43) Veröffentlichungstag der Anmeldung:
**24.02.88 Patentblatt 88/08**

(45) Bekanntmachung des Hinweises auf die Patenterteilung:
**14.11.90 Patentblatt 90/46**

(84) Benannte Vertragsstaaten:
**AT BE CH DE ES FR GB GR IT LI NL SE**

(56) Entgegenhaltungen:
**FR-A-2 343 007**
**GB-A-2 152 065**
**US-A-4 247 439**
**US-A-4 444 923**

(73) Patentinhaber: **BASF Lacke + Farben Aktiengesellschaft**
**Max-Winkelmann-Strasse 80**
**D-4400 Münster (DE)**

(72) Erfinder: **Scherping, Karl-Heinz, Dr.**
**Wiesenweg 12**
**D-4406 Drensteinfurt (DE)**
Erfinder: **Hölscher, Hans-Jörg, Dr.**
**Haus Angelmodde 28**
**D-4400 Münster (DE)**
Erfinder: **Reichelt, Uwe**
**Tulpenweg 15**
**D-4542 Tecklenburg 3 (DE)**
Erfinder: **Reiter, Udo, Dr.**
**Regerstrasse 22**
**D-44040 Telgte (DE)**

Courier Press, Leamington Spa, England.

EP 0 256 521 B1

**Beschreibung**

Die Erfindung betrifft ein wäßriges Überzugsmittel, erhalten aus einem Epoxidharz, zum Teil Carboxylgruppen enthaltenden ethylenisch ungesättigten Monomeren, einem Peroxidinitiator, einem Vernetzungsmittel, einem Neutralisationsmittel, organischen Lösungsmitteln sowie ggf. weiteren üblichen Zusatzstoffen, wie Weichmachern, Stabilisatoren, Netzmitteln, Dispergierhilfsmitteln, Katalysatoren und Pigmenten.

Hochmolekulare Epoxidharze sind insbesondere geeignet für Blechemballagen-Innenschutzlacke. Als Vernetzer dienen beispielsweise Phenolformaldehyd-, Melamin- und Harnstoffharze. Derartige Beschichtungsmittel auf Lösungsmittelbasis enthalten aufgrund vorgegebener Applikationsviskosität einen Lösungsmittelgehalt von zumeist zwischen 70 und 60%. Muß — wie bei der Lackierung von zweiteiligen Getränkedosen — mit Spritzlack-Applikationen gearbeitet werden, resultiert zumeist ein weiterer Anstieg des Lösungsmittelgehaltes, was starke Belastungen durch Lösungsmittelemissionen zur Folge hat.

Die Vorteile wäßriger Beschichtungssysteme liegen demgegenüber in einer deutlich verminderten Lösungsmittelemission. Besonders vorteilhaft ist in diesem Zusammenhang die Applikation wäßriger Kunstharzdispersionen mittels der Elektrotauchlackierung, da mit dieser Methode eine nahezu 100 %ige Lackausbeute und eine weiter verringerte Emission von Lösungsmitteln erreicht werden können. Außerdem ist mittels der elektrophoretischen Beschichtung die Beschichtung unterschiedlichster Dosengeometrien möglich durch den Effekt des Umgriffs von Elektrotauchlacken, wobei im Gegensatz zum Lackauftrag durch Spritzapplikation eine gleichmäßige Schichtstärke und damit auch eine gute Kantenabdeckung erreicht werden. Darüber hinaus bietet das Elektrotauchlackier-Verfahren die besten Voraussetzungen für eine Prozeß-Automatisierung, wodurch dieses Verfahren zusätzliche Einsparungsmöglichkeiten neben dem verringerten Materialbedarf bietet.

Die Elektrotauchlackierung ist bekanntermaßen sowohl für anionische als auch für kationische Bindemittelsysteme einsetzbar. Im Falle eines Kontaktes mit Lebensmitteln, z.B. bei Doseninnenbeschichtungen, ist jedoch zu bedenken, daß die Innenschutzlacke strengen lebensmittelrechtlichen Vorschriften entsprechen müssen. Darüber hinaus müssen derartige Beschichtungen bei Lagerung in Kontakt mit den überwiegend sauren bis neutralen Füllgütern beständig sein. Unter Berücksichtigung dieser Anforderungen ist grundsätzlich die anodische Elektrotauchlackierung vorteilhafter als die kathodische Variante, da die kathodisch abgeschiedenen Filme zumeist Amin-Gruppen enthalten und somit bei Kontakt mit sauren Füllgütern Beständigkeitsschwächen ergeben können.

Lösungsmittelhaltige Dosen-Innenschutzlacke mit guten Eigenschaften auf der Basis von Kombinationen aus Epoxidharzen und Phenolformaldehydharzen oder Aminoplastharzen sind in der Dosenbe-schichtung seit langem bekannt. Insbesondere Epoxidharze auf Basis Bisphenol A mit mittleren Molmassen von mehr als 3000 g/Mol ergeben sehr beständige Beschichtungen, wobei Phenolformaldehydharze einen entscheidenden Beitrag zur Beständigkeit gegenüber sauren wie auch Schwefel abspaltenden Füllgütern leisten.

Zur Anwendung solcher Systeme in wäßrigem Medium muß das Epoxidharz durch die Einführung solubilisierender Gruppen derart modifiziert werden, daß ein wasserlösliches bzw. wasserdispergierbares System entsteht. Kationische wäßrige Systeme lassen sich in bekannter Weise durch Umsetzung von Epoxidharzen mit Aminen erhalten. Für die Herstellung anionisch gelöster Kunstharze wird zumeist eine Carboxylfunktionalität eingeführt. Dazu kann das Epoxidharz, wie beispielsweise in der US—PS 3,862,914 beschrieben, über eine Umsetzung mit Polycarbonsäureanhydriden zu einem Carboxyl-funktionellen Polymer umgesetzt werden. Derartige Systeme, in denen Polycarbonsäuren über Halbesterfunktionen an Polymere gebunden sind, sind jedoch äußerst hydrolyseanfällig, wodurch die entsprechenden wäßrigen Dispersionen derartiger Polymerer eine zu geringe Lagerbeständigkeit aufweisen (E. T. Turpin, J. Paint Technol., Vol. 47, Nr. 602, Seite 40, 1975). Eine hydrolysestabile Anbindung der Carboxylfunktionalität an das Epoxidharz kann gemäß der US—PS 3,960,795 über die Umsetzung der Epoxidfunktionen mit para-Hydroxybenzoesäureestern unter Ausbildung einer Etherbindung, gefolgt von einer Hydrolyse des Benzoesäureesters unter Freisetzung der Carboxylfunktionalität erreicht werden. Der Nachteil dieser Methode besteht darin, daß insbesondere die für Doseninnenschutzlacke benötigten hochmolekularen Epoxidharze aufgrund ihres geringen Gehaltes an Epoxidgruppen auf diesem Weg nicht in dem für eine wäßrige Dispersion notwendigen Umfang mit Carboxylgruppen funktionalisiert werden können.

Aus der US—PS 4,247,439 und den europäischen Patentschriften Nr. 6334 und 6336 sind hydrolysestabile wäßrige Doseninnenschutzlacke bekannt, die aus Veresterungsprodukten von Epoxidharzen mit Carboxyl-funktionellen Polyacrylatharzen erhalten werden. Hydrolysestabile wässerige Doseninnenschutzlacke sind außerdem bekannt aus US—PS 4,212,781 sowie US—PS 4,308,185.

Die gattungsbildende US—PS 4,212,781 offenbart in wäßrigem, basischem Medium dispergierbare Harzmischungen, die erhalten werden durch Copolymerisation von zum Teil Carboxylgruppen enthaltenden ethylenisch ungesättigten Monomeren in Gegenwart eines aliphatischen oder aromatischen 1,2-Diepoxidharzes unter Verwendung von mindestens 3 Gew.-%, bezogen auf das Monomerengewicht, Benzylperoxid oder äquivalenter Initiatoren. Die aus der US—PS 4,212,781 bekannten Harzmischungen können mit Amino-plastharzen vernetzt werden. Sie eignen sich insbesondere zur Spritzlackierung von Getränkedosen.

Aus der DE—OS 34 46 178 sind wasserverdünnbare Zusammensetzungen zur Beschichtung von Metalldosen bekannt, wobei das in der Zusammensetzung vorliegende Polymer aus einem Reaktionsprodukt von Acrylmonomeren, eines hochmolekularen Epoxidharzes, eines Phenolformaldehyd-Harzes und eines radikalischen Initiators besteht.

Die aus dem Stand der Technik bekannten wäßrigen Systeme werden hauptsächlich zur Spritzlackierung von zweiteiligen Aluminium-Getränkedosen eingesetzt. Sie haben den Nachteil, daß sie auf problematischen Untergründen, wie z.B. abgestreckt-tiefgezogenen Getränkedosen aus Weißblech, einen unzureichenden Oberflächenschutz bieten.

Die Aufgabe der vorliegenden Erfindung bestand darin, ein wäßriges Überzugsmittel für die Beschichtung von Metalldosen zur Verfügung zu stellen, wobei eine universelle Einsetzbarkeit der Beschichtungsmittel gewährleistet sein soll, d.h. die Beschichtungsmittel sollen sich zur Beschichtung von Dosen aus Aluminium, aus Weißblech und aus anderweitig speziell oberflächenvorbehandeltem Stahl eignen. Insbesondere ist an die Beschichtung von zweiteiligen Getränkedosen gedacht, darüber hinaus aber auch an die Beschichtung von Konservendosen, die gegenüber einer breiten Palette von Füllgütern auch unter Sterilisationsbedingungen beständig sein müssen. Die neuen Beschichtungssysteme sollen auch auf problematischem Untergrund einen ausreichenden Oberflächenschutz bieten. Als problematische Untergründe sind dabei z.B. abgestreckt-tiefgezogene Weißblechdosen mit geringer Zinnauflage anzusehen, deren Oberfläche bekanntermaßen aus Eisen, wenig freiem Zinn und verschiedenen Eisen-Zinn-Legierungen besteht. Die wäßrigen Dispersionen sollen insbesondere lagerstabil sein, und sie sollten sich gut pigmentieren lassen. Daraus hergestellte Beschichtungsmittel sollten sich einwandfrei mittels Spritzlackierung und auch anodischer Elektrotauchlackierung applizieren lassen. Im Falle der Elektrotauchlackierung müssen die Bindemittel unter dem Einfluß der Elektrodenreaktionen an der als Anode geschalteten Dose zu einem geschlossenen Lackfilm koagulieren, der einen möglichst hohen Filmwiderstand aufweist. Dabei müssen alle Überzugsmittel-Komponenten, wie Vernetzer, Hilfsmittel und ggf. Pigmente, in dem Mengenverhältnis abgeschieden werden, in dem sie auch in der Dispersion vorliegen. Bei den meisten Systemen des Standes der Technik tritt das Problem auf, daß das neutrale Vernetzungsmittel nicht in dem Maße abgeschieden wird, wie es in der wäßrigen Dispersion vorliegt.

Ein weiteres Erfordernis der herzustellenden Überzugsmittel besteht darin, daß die Elektrotauchlacke unter Berücksichtigung der Gegebenheiten der industriellen Dosenfertigung Beschichtungszeiten zwischen etwa 0,5 und 30 Sekunden ermöglichen sollen. Unter diesen Bedingungen müssen sich die für Blechembalagen typischen Filmschichtstärken zwischen etwa 4 und 10 μm herstellen lassen. Dazu muß der Naßfilmwiderstand mindestens $10^8 \ \Omega^{-1} cm^{-1}$ betragen. Der Umgriff des Elektrotauchlackes sollte so gut ausgeprägt sein, daß auch komplizierte Dosengeometrien mit einem porendichten Lackfilm von konstanter Schichtstärke beschichtet werden können. Ferner müssen die Stromstärke-Spannungs-Charakteristiken der Elektrotauch-Materialien auf praktisch verwendbare Elektrodengeometrien abgestimmt sein.

Die abgeschiedenen Naßfilme sollten hinreichend hydrophob sein, um eine Spülung der Dosen mit den gängigen Spülmedien, wie destilliertes Wasser, Trinkwasser, Ultrafiltrat, zu ermöglichen und eine Rücklösung im Elektrotauch-Material auszuschließen.

Die eingebrannten Lackfilme sollten zumindest das Eigenschaftsniveau konventioneller Doseninnenschutzlacke bezüglich Porenfreiheit, Füllgutbeständigkeit, Blechhaftung, Härte, Elastizität und Geschmacksneutralität erreichen bzw. dieses übertreffen. Dazu muß gegebenenfalls der Gehalt der Bindemittel an Restmonomeren durch geeignete Herstellverfahren so gering wie möglich gehalten werden. Zur ersten Beurteilung der Füllgutbeständigkeit in Form von Kurztests ist dabei die Pasteurisations- bzw. Sterilisationsbeständigkeit eingebrannter Lackfilme gegenüber verschiedenen Testlösungen — im einfachsten Fall gegenüber Wasser — wichtig.

Die der vorliegenden Erfindung zugrundeliegende Aufgabe wird durch das wäßrige Überzugsmittel der eingangs genannten Art gelöst, das dadurch gekennzeichnet ist, daß das Überzugsmittel auf einem Bindemittel a) basiert, welches erhältlich ist aus

A) 20 bis 80 Gewichts-% eines Epoxidharzes mit im Mittel mehr als einer Epoxidgruppe pro Molekül und mit einem mittleren Molekulargewicht von mindestens 500,

B) 1 bis 60 Gewichts-% Polyesterpolycarbonsäuren mit einem mittleren Molekulargewicht von 500 bis 5000 und einer Säurezahl von 30 bis 150 und

C) 10 bis 50 Gew.-% ethylenisch ungesättigten Monomeren, wobei 10 bis 50 Gew.-% der Monomeren Carboxylgruppen enthalten,

wobei die Summe von A), B) und C) 100 Gew.-% beträgt, der Peroxidinitiator in einem Anteil von mindestens 2 Gew.-%, bezogen auf das Gesamtgewicht der Monomeren C), eingesetzt wird, das Bindemittel a) eine Säurezahl von 20 bis 150 aufweist und als Vernetzer b) Phenoplast- und/oder Aminoplastharze verwendet werden mit der Maßgabe, daß das Überzugsmittel

a) 30 bis 70 Gew.-% des Bindemittels a),

b) 2 bis 30 Gew.-%, bevorzugt 5 bis 16 Gew.-%, des Phenoplast- und/oder des Aminoplastharzes b),

c) 1 bis 70 Gew.-%, bevorzugt 2 bis 5 Gew.-%, Ammoniak und/oder Amin als Neutralisationsmittel und

d) 20 bis 60 Gew.-% organische Lösungsmittel, wobei die Summe von a), b), c) und d) 100 Gew.-% beträgt, enthält.

Als Komponente A) werden bevorzugt Polyglycidylether von Bisphenol A mit einem mittleren Molekulargewicht von 500 bis 20 000 eingesetzt. Beispiele für geeignete Epoxidharze sind Glycidylpolyether, die z.B. unter den Warenzeichen Epikote 1001, 1004, 1007 und 1009 vertrieben werden. Vorteilhafterweise

3

weisen die Epoxidharze (Komponente A) ein mittleres Molekulargewicht von mindestens 3000 g/mol auf.

Die Herstellung der als Komponente B) eingesetzten Polyesterpolycarbonsäuren erfolgt nach den dem Fachmann bekannten Bedingungen für Polyveresterungsreaktionen. Es handelt sich hierbei um bekannte Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Mono-, Di- und Triolen. Bevorzugte Ausgangsverbindungen für die Polyesterpolycarbonsäuren sind Terephthalsäure, Isophthalsäure, Trimellitsäure, Trimellitsäureanhydrid, Adipinsäure, Sebazinsäure, aliphatische Monoole mit 4 bis 20 Kohlenstoffatomen, 2,2-Dimethyl-1,3-propandiol, Ethylenglykol, Diethylenglykol, Trimethylolpropan, Glycerin, Pentaerythrit.

Vorzugsweise haben die Polyesterpolycarbonsäuren B) ein mittleres Molekulargewicht von 1000 bis 3000 und eine Säurezahl von 50 bis 100.

Eine bevorzugte Ausführungsform für die Polyesterpolycarbonsäurekomponente B) besteht darin, daß als Polyolkomponente zur Herstellung der Polyesterpolycarbonsäuren Esterdiole und/oder Glycidylester von Monocarbonsäuren verwendet werden. Als Beispiel für geeignete Esterdiole sei Hydroxypivalinsäureneopentylglykolester genannt. Ein geeigneter handelsüblicher Glycidylester von Monocarbonsäuren ist der Glycidylester der Versaticsäure, einer verzweigten Monocarbonsäure.

Die unter Verwendung von Esterdiolen und/oder Glycidylestern von Mono-Carbonsäuren hergestellten Polyesterpolycarbonsäuren weisen Säurezahlen im Bereich von 100 bis 130 auf.

Die als Komponente C) eingesetzten ethylenisch ungesättigen Monomeren bestehen zu 10 bis 50 Gew.-% aus Carboxylgruppen enthaltenden Monomeren. Als Beispiele für Carboxylgruppen enthaltende Monomere sind Acrylsäure und Methacrylsäure zu nennen. Des weiteren können als Monomere nicht funktionalisierte Monomere, wie beispielsweise Styrol, Vinyltoluol und α-Methylstyrol eingesetzt werden.

Als dritte Klasse von Monomeren werden vorzugsweise (Meth)acrylsäureester mit 1 bis 20 Kohlenstoffatomen im Alkoholrest, wobei auch hydroxifunktionelle Monomere eingesetzt werden können, verwendet. Beispiele hierfür sind Ethylacrylat, Propylacrylat, Isopropylacrylat, Butylacrylat, Isobutylacrylat, t-Butylacrylat, Pentylacrylat, Decylacrylat, Isobutylmethacrylat, Hexylmethacrylat, 2-Ethylhexylmethacrylat, Octylmethacrylat, Nonylmethacrylat sowie Hydroxiethylacrylat, Hydroxipropylacrylat, Hydroxibutylacrylat, Hydroxiethylmethacrylat, Hydroxipropylmethacrylat und Hydroxibutylmethacrylat.

Die ethylenisch ungesättigten Monomeren der Komponente C) bestehen vorzugsweise aus

x) 10 bis 50 Gew.-%, bevorzugt 20 bis 40 Gew.-%, Carboxylgruppen enthaltenden Monomeren,

y) 0 bis 50 Gew.-%, bevorzugt 20 bis 40 Gew.-%, nicht-funktionalisierten Monomeren und

z) 5 bis 60 Gew.-%, bevorzugt 10 bis 50 Gew.-%, (Meth)acrylsäureestern mit 1 bis 20 Kohlenstoffatomen im Alkoholrest, welche ggf. hydroxifunktionell sind,

wobei die Summe von x), y) und z) 100 Gew.-% beträgt.

Die Komponente C) hat eine Säurezahl im Bereich von 30 bis 150, vorzugsweise im Bereich von 50 bis 100.

Vorzugsweise wird das Bindemittel a) erhalten aus 35 bis 60 Gew.-% A), 10 bis 35 Gew.-% B) und 15 bis 30 Gew.-% C), wobei die Summe von A), B) und C) 100 Gew.-% beträgt.

Bevorzugt werden mindestens 2,6 Gew.-%, besonders bevorzugt mindestens 3 Gew.-%, bezogen auf das Gesamtgewicht der ethylenisch ungesättigten Monomeren, Peroxidinitiatoren eingesetzt.

Gemäß der vorliegenden Erfindung kann jedes beliebige Phenoplastharz verwendet werden, solange es die für die Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft.

Bevorzugt werden Phenoplastharze vom Resoltyp eingesetzt, die auf Bisphenol A basieren und mehr als eine Methylolgruppe je Phenylring enthalten.

Typische Aminoplastharze sind Melamin-, Benzoguanamin- und Harnstoffformaldehydharze. Bevorzugt werden diese in mit niederen Alkoholen, meistens Butanol, veretherter Form verwendet. Geeignete Aminoplastharze sind beispielsweise unter dem Warenzeichen Cymel auf dem Markt erhältlich. Ein geeignetes Aminoplastharz ist beispielsweise Hexamethoxymethylmelamin.

Selbstverständlich sind neben den Kondensationsprodukten mit Formaldehyd auch solche mit anderen Aldehyden verwendbar.

Erfindungsgemäß enthält das Überzugsmittel als Neutralisationsmittel 1 bis 7 Gew.-%, bevorzugt 2 bis 5 Gew.-%, Ammoniak und/oder Amine. Durch Neutralisation mit der Komponente c) wird das Überzugsmittel in Wasser dispergierbar. Bevorzugt werden Triethylamin und/oder Dimethylethanolamin als Neutralisationsmittel eingesetzt.

Die erfindungsgemäßen wäßrigen Überzugsmittel enthalten weiterhin 20 bis 60 Gewichts-% organische Lösungsmittel. Bei Einsatz der wäßrigen Überzugsmittel als anodische Elektrotauchlacke ist darauf zu achten, daß die organischen Lösungsmittel die Effektivität der anodischen Abscheidung und den Verlauf des Lackfilms positiv beeinflussen. Bevorzugt werden schwerflüchtige Cosolventien eingesetzt, wie Monoalkohole mit 4 bis 18 Kohlenstoffatomen, Glykolether, wie beispielsweise Ethylenglykolmonoethylether und dessen höhere Homologe mit 5 bis 20 Kohlenstoffatomen oder entsprechende Ether des 1,2- und 1,3-Propandiols.

Die zuvor beschriebenen erfindungsgemäßen Überzugsmittel werden in einem Verfahren hergestellt, das dadurch gekennzeichnet ist, daß zunächst das Epoxidharz A) bei 80 bis 200°C, vorzugsweise bei 120 bis 180°C, unter Verwendung von Katalysatoren mit der Polyesterpolycarbonsäurekomponente B) umgesetzt wird, so daß mindestens 80% der anfänglich vorhandenen Oxiranringe geöffnet werden, anschließend in Gegenwart des im ersten Verfahrensschritt erhaltenen Reaktionsproduktes die Komponente C) bei 100 bis 160°C, bevorzugt bei 120 bis 140°C, unter Verwendung von mindestens 2 Gew.-%, bezogen auf das Gewicht der ethylenisch ungesättigten Monomeren, peroxidischer, bevorzugt Benzoyloxi- und/oder Phenylradikale liefernder Initiatoren radikalisch polymerisiert wird, in einem dritten Verfahrensschritt das erhaltene Produkt mit der Komponente c) neutralisiert wird, das organische Lösungsmittel d), das Vernetzungsmittel b) sowie gegebenenfalls weitere übliche Zusatzstoffe zugemischt werden und das Überzugsmittel in Wasser dispergiert wird.

Die im ersten Verfahrensschritt erfolgende Umsetzung des Epoxidharzes mit Polyesterpolycarbonsäuren wird mit Aminen, vorzugsweise mit tertiären Aminen, katalysiert. Die Umsetzung erfolgt in der Weise, daß zumindest 80% der Oxiranringe in β-Hydroxyestergruppen überführt werden.

Im zweiten Verfahrensschritt werden die ethylenisch ungesättigten, zum Teil Carboxylgruppen enthaltenden Monomeren der Komponente C) in Gegenwart des im ersten Verfahrensschritt erzeugten β-Hydroxyesters einer radikalischen Polymerisationsreaktion unterworfen. Die radikalische Polymerisation wird von mindestens 2 Gew.-%, bezogen auf das Gesamtgewicht der Monomeren, peroxidischer, bevorzugt Benzoyloxi- und/oder Phenylradikale liefernder Initiatoren initiiert. Bevorzugt werden dabei mindestens 2,6 Gew.-%, besonders bevorzugt mindestens 3 Gew.-%, an Initiatoren verwendet. Selbstverständlich werden auch gute Ergebnisse erzielt, wenn hohe Anteile an Initiatoren, z.B. 8 bis 10 Gew.-%, eingesetzt werden, doch ist dies aus wirtschaftlichen Gründen nicht empfehlenswert. Wird in Gegenwart relativ niedriger Initiatorkonzentrationen, z.B. bei weniger als 3 Gew.-%, bezogen auf das Monomergewicht, polymerisiert, ist ein höherer Neutralisationsgrad nötig, um eine stabile Dispersion zu erhalten (vgl. Beispiel 3 aus Tabelle 1).

In erster Linie werden peroxidische Initiatoren eingesetzt, die unter Bildung von Benzoyloxi- und/oder Phenylradikalen zerfallen. Selbstverständlich ist es aber möglich, andere Initiatoren zu verwenden, sofern diese zu äquivalenten radikalischen Bedingungen führen.

Bevorzugt werden Dibenzoylperoxid und/oder tert. Butylperbenzoat als Initiatoren eingesetzt. Als weitere mögliche Initiatoren sind tert. Butylperoctoat, Cumolhydroperoxid und Methylethylketonperoxid zu nennen.

Vorteilhafterweise wird durch Initiatornachdosierung und/oder durch Verlängerung des Initiatorzulaufs der Anteil an Restmonomeren auf weniger als 0,2%, bezogen auf die Summe von a) bis d), gehalten.

Nach der radikalischen Polymerisation wird in einem dritten Verfahrensschritt das erhaltene Polymerisat neutralisiert, um das Überzugsmittel wasserdispergierbar zu machen. Die für die Erzeugung eines gut verlaufenden anodisch abgeschiedenen Films notwendigen schwerflüchtigen Cosolventien d), die als Vernetzer dienenden Phenoplastharze oder Aminoplastharze b) sowie weitere z.B. in der Elektrotauchlackierung üblichen Zusatzstoffe werden dem System zugemischt. Zum Schluß wird das System in Wasser dispergiert.

Eine bevorzugte Ausführungsform des erfindungsgemäßen Verfahrens besteht darin, daß nach der radikalischen Polymerisation bereits eine Präkondensation mit dem Vernetzungsmittel b) durchgeführt wird. Auf diese Weise wird erreicht, daß das Vernetzungsmittel b) in dem Maße bei einer Elektrotauchlackierung mit abgeschieden wird, wie es im wäßrigen Überzugsmittel vorliegt.

Das vor der Dispergierung in Wasser erhaltene Gemisch kann als Kompensationslack verwendet werden, indem die Herstellung der wäßrigen Dispersion erst beim Einsatz des Bindemittels im Elektrotauchlack erfolgt.

Eine bevorzugte Ausführungsform des erfindungsgemäßen Verfahrens besteht darin, daß das organische Lösungsmittel d) bereits als Lösungsmittel der als erster Verfahrensschritt erfolgenden Veresterung des Epoxidharzes A) und der Polyesterpolycarbonsäuren B) eingesetzt wird.

Die erfindungsgemäßen wäßrigen Überzugsmittel werden vorteilhafterweise verwendet für die anodische Elektrotauchlackierung von Dosen und Dosenhalbteilen. Selbstverständlich sind sie aber auch für die Spritzlackierung von Dosen einsetzbar. Bei der anodischen Elektrotauchlackierung werden die Dosen in ein wäßriges Bad auf Basis der erfindungsgemäßen, zuvor beschriebenen Überzugsmittel eingetaucht und als Anode geschaltet.

Mittels Gleichstrom wird ein Film auf den Dosen abgeschieden, das Substrat wird aus dem Bad entfernt, und der Film wird durch Einbrennen gehärtet.

Die endgültige Aushärtung des Lackfilmes erfolgt bei der Spritzlackierung und auch bei der Elektroabscheidung durch Einbrennen.

Die erfindungsgemäßen wäßrigen Überzugsmittel eignen sich zur Beschichtung von Dosen, die aus unterschiedlichen Materialien bestehen können und unterschiedlichste Dosengeometrien aufweisen können. So lassen sich Dosen aus Aluminium und solche aus Weißblech, z.B. abgestreckt-tiefgezogene zweiteilige Getränkedosen gleichermaßen gut mit den erfindungsgemäßen Überzugsmitteln beschichten. Des weiteren lassen sich auch Dosen aus Oberflächen-vorbehandeltem Stahlblech hervorragend beschichten.

Die wäßrigen zuvor beschriebenen Überzugsmittel sind ebenfalls hervorragend geeignet zur Beschichtung abgestreckt-tiefgezogener oder anderweitig tiefgezogener Konservendosen, welche zur Haltbarmachung des Füllgutes einer Sterilisationsbelastung unterzogen werden.

Bei den angesprochenen Dosenhalbteilen handelt es sich um Rümpfe und Deckel, die zur Herstellung von Konservendosen dienen. Besonders vorteilhaft erweist sich die anodische Beschichtung der Dosenhalbteile, wenn die Rümpfe geschweißt und die Deckel als Aufreißdeckel vorliegen.

Vorteile des erfindungsgemäßen Verfahrens bestehen darin, daß es vielfältige Möglichkeiten zur Steuerung der Säurezahl durch Variation des Polyesters oder des Polymerisats gibt. Auf diese Weise können Applikationseigenschaften wie auch Haftungseigenschaften für spezifische Metalloberflächen optimiert werden. Durch das Polymerisationsverfahren sind die Verträglichkeit der Komponenten untereinander und die Unbedenklichkeit bezüglich der Restmonomeren gewährleistet.

Die erfindungsgemäßen, wäßrigen Überzugsmittel sind lagerstabil und sie lassen sich einwandfrei mittels der anodischen Elektrotauchlackierung applizieren. Die erhaltenen eingebrannten Lackfilme haben ein gutes Eigenschaftsniveau bezüglich Porenfreiheit, Füllgutbeständigkeit, Blechhaftung, Härte, Elastizität und Geschmacksneutralität. Außerdem ermöglichen die eingesetzten Bindemittelkombinationen eine gute Pigmentbenetzung.

Nachfolgend wird die Erfindung anhand von Ausführungsbeispielen näher erläutert:

1. Herstellung einer Polyesterpolycarbonsäure

1.1 In einem Vierhalskolben, der mit Rührer, Thermometer und Wasserabscheider ausgerüstet ist, werden 1330 g Isophthalsäure, 145 g Adipinsäure, 780 g 2,2-Dimethyl-1,3-propandiol, 268 g Trimethylolpropan und 200 g Isodecanol eingewogen und bei 220°C auf eine Säurezahl kleiner 5 mg KOH/g kondensiert. Bei 170°C werden 500 g Trimellitsäureanhydrid zugegeben und der Ansatz gehalten, bis die Viskosität konstant wird. Die Polyesterharzschmelze wird schließlich in Butylglykol 70%ig gelöst. Die Säurezahl beträgt 85 mg KOH/g.

1.2 In einem Vierhalskolben, der mit Rührer, Thermometer und Rückflußkühler ausgerüstet ist, werden 1200 g Glycidylester der Versaticsäure, 900 g 2-Butanon, 900 g Trimellitsäureanhydrid und 5 g N,N-Dimethylbenzylamin auf 90°C erwärmt. Wenn die Viskosität (gemessen bei 23°C) auf 1,5 Pas gestiegen ist, wird der Ansatz abgekühlt und ausgetragen.

2. Herstellung von Epoxiesterharzen

2.1 Herstellung eines Epoxiesterharzes auf Basis der unter 1.1 hergestellten Polyesterpolycarbonsäure

In einem Vierhalskolben, der mit Rührer, Thermometer und Rückflußkühler ausgerüstet ist, wird eine Mischung aus 1050 g eines Epoxidharzes auf Basis Bisphenol A mit einem Epoxy-Äquivalentgewicht von 3400, 700 g Butylglykol, 350 g 1-Phenoxy-2-propanol, 2 g N,N-Dimethylbenzylamin und 1000 g der unter 1.1 hergestellten Polyesterpolycarbonsäure auf 160°C erwärmt, bis die Säurezahl auf 20 mg KOH/g gefallen ist. Der so hergestellte Epoxiester besitzt in 30 %iger Lösung in Butylglykol eine Viskosität von 370 mPa.s bei 23°C.

2.2 Herstellung eines Epoxiesters auf Basis der unter 1.2 hergestellten Polyestercarbonsäure

In einem Vierhalskolben, der mit Rührer, Thermometer und Destillationsaufsatz ausgerüstet ist, wird eine Lösung von 1050 g eines Epoxidharzes auf Basis Bisphenol A mit einem Epoxy-Äquivalentgewicht von 3400 in 1000 g Butylglykol und 440 g Propylenglykolmonophenylether auf 140°C erhitzt. Nach Zugabe von 2 g N,N-Dimethylbenzylamin läßt man 950 g der unter 1.2 hergestellten Polyesterpolycarbonsäure zulaufen und destilliert gleichzeitig das Lösungsmittel (2-Butanon) ab. Der Ansatz wird noch 3 Stunden bei 160°C gehalten. Die Säurezahl liegt dann bei 37 mg KOH/g und die Viskosität (einer 30 %igen Lösung in Butylglykol bei 23°C) bei 380 mPa.s.

3. Herstellung von Bindemittel-Lösungen aus den unter 2. hergestellten Epoxiesterharzen

3.1 Herstellung unter Verwendung des unter 2.1 hergestellten Epoxiesterharzes

Beispiel 1

In einem Vierhalskolben mit Rührer, Thermometer, Rückflußkühler und zwei Zulaufbehältern werden 2400 g des unter 2.1 hergestellten Epoxiesters vorgelegt. Dazu gibt man bei 140°C gleichzeitig aus dem ersten Zulaufbehälter eine Mischung aus 130 g Acrylsäure, 160 g Styrol und 200 g Butylacrylat und aus dem zweiten Zulaufbehälter eine Lösung von 30 g tert. Butylperbenzoat in 40 g Butylgklykol. Die Monomeren werden während 2, der Initiator während 3 h zudosiert. Nach Beendigung der Polymerisation werden 190 g eines hochmethylolierten Bisphenol A-Formaldehydharzes bei 90°C 2 Stunden mit dem Ansatz präkondensiert.

Es resultiert eine 58 %ige Bindemittel-Lösung, die nach Zugabe von basischen Neutralisationsmitteln direkt als Kompensationslack für die anodische Elektrotauchlackierung einsetzbar ist.

Beispiel 2

In einem Vierhalskoben mit Rührer, Thermometer, Rückflußkühler und zwei Zulaufbehältern werden 2400 g des unter 2.1 hergestellten Epoxiesters vorgelegt. Dazu gibt man bei 140°C gleichzeitig aus einem ersten Zulaufbehälter eine Mischung aus 130 g Acrylsäure, 160 g Styrol und 200 g Butylacrylat und aus dem zweiten Zulaufbehälter eine Lösung von 30 g tert. Butylperbenzoat in 40 g Butylglykol. Die Monomeren werden während 2 Stunden, der Initiator wird während 3 Stunden zudosiert. Nach Beendigung der Polymerisation werden 190 g eines butylierten Melamin-Formaldehyd-Harzes zugegeben.

Es resultiert eine 58 %ige Bindemittel-Lösung, die nach Zugabe von basischem Neutralisationsmittel direkt als Kompensationslack für die anodische Elektrotauchlackierung einsetzbar ist.

## Beispiel 3

In einem Vierhalskolben mit Rührer, Thermometer, Rückflußkühler und zwei Zulaufbehältern werden 2352 g des unter 2.1 hergestellten Epoxiesters vorgelegt. Dazu gibt man bei 140°C gleichzeitig aus dem ersten Zulaufbehälter eine Mischung aus 130 g Acrylsäure, 160 g Styrol und 190 g Butylacrylat und aus dem zweiten Zulaufbehälter eine Lösung von 13,4 g tert. Butylperbenzoat in 40 g Butylglykol. Die Monomeren werden während 2, der Initiator während 3 Stunden zudosiert. Nach Beendigung der Polymerisation werden 190 g eines hochmethylolierten Bisphenol A-Formaldehydharzes bei 90°C 2 Stunden mit dem Ansatz präkondensiert.

Es resultiert eine 57 %ige Bindemittel-Lösung, die nach Zugabe von basischen Neutralisationsmitteln direkt als Kompensationslack für die anodische Elektrotauchlackierung einsetzbar ist.

3.2 Herstellung unter Verwendung des unter 2.2 herstellten Epoxiesterharzes

## Beispiel 4

In einem Vierhalskolben mit Rührer, Thermometer, Rückflußkühler und zwei Zulaufbehältern werden 2100 g des unter 2.2 hergestellten Epoxiesters und 300 g Butylglykol vorgelegt. Dazu gibt man bei 140°C gleichzeitig aus dem ersten Zulaufbehälter eine Mischung aus 130 g Acrylsäure, 160 g Styrol und 200 g Butylacrylat und aus dem zweiten Zulaufbehälter eine Lösung von 30 g tert. Butylperbenzoat in 40 g Butylglykol. Die Monomeren werden während 2 h, der Initiator während 3 h zudosiert. Nach Beendigung der Polymerisation werden 190 g eines hochmethylolierten Bisphenol A-Formaldehydharzes bei 90°C 2 Stunden mit dem Ansatz präkondensiert.

Es resultiert eine 56 %ige Bindemittel-Lösung, die nach Zugabe von basischen Neutralisationsmitteln direkt als Kompensationslack für die anodische Elektrotauchlackierung einsetzbar ist.

3.3 Vergleichsbeispiele

## Vergleichsbeispiel 1
Modifizierung eines Epoxidharzes mit Trimellitsäureanhydrid

Zur Herstellung eines Vergleichsansatzes ohne Additionspolymer wird das unter 2. eingesetzte hochmolekulare Epoxidharz nach Veresterung der Glycidylreste mit einer Monocarbonsäure mit Trimellitsäureanhydrid umgesetzt.

Dazu werden 41,8 Teile eines hochmolekularen Epoxidharzes auf Basis von Bisphenol A mit einem Epoxidäquivalentgewicht von 3400 in 41,0 Teilen Ethylenglykolmonobutylether gelöst und bei 130°C mit 1,94 Teilen Isononansäure und 0,06 Teilen N,N-Dimethylbenzylamin umgesetzt, bis die Säurezahl auf unter 3 mg KOH/g gefallen ist. Es werden 7,7 Teile Trimellitsäureanhydrid zugegeben und die Temperatur gehalten, bis eine Säurezahl von 80 mg KOH/g erreicht ist. Nach Abkühlen auf 90°C werden 3,5 Teile eines Phenol-Formaldehydharzes (Resol-Typ auf Basis Bisphenol A) zugegeben und der Ansatz 2 Stunden bei 90°C gerührt. Der Festkörper liegt dann bei 55%.

## Vergleichsbeispiel 2
Herstellung eines Acryl-Epoxy-Pfropfpolymerisates

Zur Herstellung eines Vergleichsansatzes wird ein Monomeren-Gemisch in Gegenwart eines hochmolekularen Epoxidharzes, jedoch in Abwesenheit einer Polyesterkomponente, polymerisiert.

Dazu werden 1120 g eines hochmolekularen Epoxidharzes auf Basis von Bisphenol A mit einem Epoxidäquivalentgewicht von 3400 in 570 g Butylglykol und 850 g n-Butanol gelöst und bei 140°C mit 44 g Dimethylolpropionsäure und 1,5 g N,N-Dimethylbenzylamin umgesetzt, bis die Säurezahl auf unter 3 mg KOH/g gefallen ist. Dazu gibt man innerhalb von 2 Stunden bei 120°C eine Mischung aus 175 g Methacrylsäure, 130 g Styrol, 5 g 2-Ethylhexylmethacrylat und 28 g Benzoylperoxid (75 %ig). Nach Beendigung der Polymerisation werden 160 g eines hochmethylolierten Bisphenol A-Formaldehydharzes bei 90°C 2 Stunden mit dem Ansatz präkondensiert. Es resultiert eine 50 %ige Bindemittel-Lösung mit einer Viskosität (30 %ig in Butylglykol) von 0,8 Pa.s und einer Säurezahl von 90 mg KOH/g.

4. Herstellung von Bindemittel-Dispersionen aus den Bindemitteln der Beispeile 1, 2, 3 und 4 sowie der Vergleichsbeispiele 1 und 2

Die Bindemittellösungen der Beispiele 1, 2, 3, 4 und der Vergleichsbeispiele 1 und 2 werden gemäß den Angaben in Tabelle 1 mit Amin neutralisiert, langsam unter kräftigem Rühren in entionisiertes Wasser eindispergiert und auf einen Festkörper von 12% eingestellt. Die Eigenschaften und Kennzahlen der resultierenden Dispersionen sind in Tabelle 1 zusammengestellt.

Die Bindemittel-Dispersion E besitzt keine ausreichende Lagerstabilität bei Raumtemperatur. Nach einem Monat ist das Bindemittel weitgehend koaguliert und die Dispersion zerstört. Die Dispersionen A, B, C, D und F sind dagegen auch nach 6 Monaten Lagerung bei Raumtemperatur frei von Sediment.

Tabelle 1:

| Dispersion | A | B | C | D | E | F |
|---|---|---|---|---|---|---|
| Bindemittel | Beisp.1 | Beisp.2 | Beisp.3 | Beisp.4 | Vergl.-beisp.1 | Vergl.-beisp.2 |
| Amin | N,N-Dimethylethanolamin | N,N-Dimethylethanolamin | N,N-Dimethylethanolamin | N,N-Dimethylethanolamin | Triethylamin | Triethylamin |
| Neutralisationsgrad | 80 % | 80 % | 98 % | 80 % | 53 % | 49 % |
| Lagerstabilität der Dispersion (20°C) | > 6 Mon. | > 6 Mon. | > 6 Mon. | > 6 Mon. | < 1 Mon. | > 6 Mon. |
| pH-Wert | 8,2 | 8,2 | 8,3 | 7,8 | 8,5 | 7,2 |
| spez. Leitfähigkeit ($\mu$S/cm) | 2000 | 2200 | 2540 | 2700 | 2000 | 1750 |

5. Beschichtung von Getränkedosen mit den Bindemitteldispersionen A, B, C, D, E und F aus Tabelle 1
   5.1 Beschichtung einer Getränkedose mit der Bindemitteldispersion A

### Beispiel 5

Eine unlackierte, zweiteilige Getränkedose aus Weißblech wird am Bördelrand mit einer elektrisch leitenden Klammer gehalten, mit der Bindemitteldispersion A gefüllt und in ein gegen Erde isoliertes, leitendes Gefäß mit einem Durchmesser von 20 cm vollständig eingetaucht, welches zuvor ebenfalls mit dem Elektrotauchlack befüllt worden ist. Der positive Pol einer Gleichstromspannungsquelle wird an die Dose und der negative Pol an das Außengefäß angeschlossen. Die Beschichtung erfolgt unter Verwendung einer Hilfskathode im Inneren der Dose. Nach dem Abspülen mit entionisiertem Wasser wird 5 min. bei 210°C im Umluftofen eingebrannt. Die Dose ist innen und außen vollständig mit einem dünnen Klarlackfilm überzogen, der porendicht ist. Meßwerte vgl. Tabelle 2.

5.2 Beschichtung einer Getränkedose mit der Bindemitteldispersion B

### Beispiel 6

Die Beschichtung erfolgt analog den Ausführungen unter 5.1. Die Dose ist innen und außen vollständig mit einem dünnen, porendichten Klarlackfilm überzogen. Meßwerte vgl. Tabelle 2.

Tabelle 2:

| | Bei-spiel 5 | Bei-spiel 6 | Bei-spiel 7 | Bei-spiel 8 | Bei-spiel 9 | Ver-gleichs-beispiel 3 | Ver-gleichs-beispiel 4 |
|---|---|---|---|---|---|---|---|
| Festkörper | 12 % | 12 % | 12,5 % | 10 % | 12 % | 12 % | 12 % |
| pH-Wert | 8,2 | 7,8 | 8,2 | 8,3 | 7,8 | 8,5 | 7,2 |
| spez. Leitf. | 2000 | 2700 | 2200 | 2540 | 2700 | 2000 | 1750 $\mu$S/cm |
| Badtemper. | 27°C | 27°C | 27°C | 27°C | 27°C | 27°C | 27°C |
| Abscheide-zeit | 20 s | 20 s | 20 s | 20 s | 20 s | 20 s | 20 s |
| Abscheide-spannung | 50 V | 60 V | 60 V | 50 V | 60 V | 160 V | 90 V |
| Lack-auflage/Dose | 480 mg | 490 mg | 900 mg | 500 mg | 490 mg | 450 mg | 460 mg |
| Ober-fläche | glänzend | glänzd. | glänzd. | glänzd. | glänzd. | matt | matt |
| Porigkeit mA (Enamel-rater) | 0,1 | 0,1 | 0,3 | 1 | 0,1 | 10 | 5 |
| Lack-haftung (Gitter-schnitt) | Gt 0 | Gt 0 | Gt 0 | Gt 0 | Gt 0 | Gt 1 | Gt 1 |
| Sterili-sation mit Wasser 30min/121°C | i.O. | i.O. | i.O. | i.O. | i.O. | Wasser-aufnahme (Blushing) | Wasser-aufnahme (Blushing) |

5.3 Beschichtung einer Getränkedose mit der pigmentierten Bindemitteldispersion B

Beispiel 7

Das Bindemittel aus Beispiel 2 wird mit Titandioxid pigmentiert (Bindemittel:Pigment = 1:1) und auf einen Festkörpe von 12,5% mit entionisiertem Wasser eingestellt.
Die Beschichtung erfolgt analog zu 5.1 und 5.2.
Die Dose ist vollständig mit einem weißen Lackfilm überzogen. Meßwerte vgl. Tabelle 2.

5.4 Beschichtung einer Getränkedose mit der Bindemitteldispersion C

Beispiel 8

Die Beschichtung erfolgt analog zu 5.1 bzw. 5.2.
Die Dose ist innen und außen vollständig mit einem dünnen, porendichten Klarlackfilm überzogen. Meßwerte vgl. Tabelle 2.

5.5 Beschichtung einer Getränkedose mit der Bindemitteldispersion D

Beispiel 9

Die Beschichtung erfolgt analog zu 5.1 bzw. 5.2.
Die Dose ist innen und außen vollständig mit einem dünnen, porendichten Klarlackfilm überzogen. Meßwerte vgl. Tabelle 2.

5.6 Beschichtung einer Getränkedose mit der Bindemitteldispersion E

Vergleichsbeispiel 3

Die Beschichtung erfolgt analog Beispiel 4—9.

Die Dose ist innen und außen mit einem matten Klarlackfilm überzogen, der nicht porendicht ist und Oberflächenstörungen aufweist. Meßwerte vgl. Tabelle 2.

5.7 Beschichtung einer Getränkedose mit der Bindemitteldispersion F

Vergleichsbeispiel 4

Die Beschichtung erfolgt wie zuvor beschrieben.

Die Dose ist innen und außen mit einem matten Klarlackfilm überzogen, der nicht porendicht ist und Oberflächenstörungen aufweist. Meßwerte vgl. Tabelle 2.

Die abgeschiedenen und eingebrannten Lackfilme zeigen in allen Beispielen keinerlei geruchliche, geschmackliche oder farbliche Beeinträchtigung gegenüber Wasser als Füllgut. Gleichartige Ergebnisse werden erzielt, wenn anstelle einer 2-teiligen Getränkedose aus Weißblech eine solche aus Aluminium verwendet wird.

6. Beschichtung einer Getränkedose mittels Spritzlackierung mit der Bindemittel-Dispersion A

Mit der anionischen Bindemitteldispersion A wird die Innenseite einer 2-teiligen Getränkedose aus Weißblech spritzlackiert. Als Spritzdruck wird 65 bar gewählt. Die Lackierung wird 2 min. bei 210°C im Umluftofen eingebrannt. Es resultiert eine aufgetragene Lackschicht von 220 mg trocken/0,33 l Dose. Der Lackfilm ist klar und glänzend und weist eine Porigkeit (Enamel-rater) von 0,8 mA auf. Die übrigen lacktechnischen Eigenschaften (Haftung und Sterilisationsbeständigkeit) entsprechen denen der Beispiele 5 bis 9 aus Tabelle 2.

**Patentansprüche**

1. Wäßriges Überzugsmittel, erhalten aus einem Epoxidharz, zum Teil Carboxylgruppen enthaltenden ethylenisch ungesättigten Monomeren, einem Peroxidinitiator, einem Vernetzungsmittel, einem Neutralisationsmittel, organischen Lösungsmitteln sowie ggf. weiteren üblichen Zusatzstoffen, wie Weichmachern, Stabilisatoren, Netzmitteln, Dispergierhilfsmitteln, Katalysatoren und Pigmenten, dadurch gekennzeichnet, daß

das Überzugsmittel auf einem Bindemittel a) basiert, welches erhältlich ist aus

A) 20 bis 80 Gew.-% eines Epoxidharzes mit im Mittel mehr als einer Epoxidgruppe pro Molekül und mit einem mittleren Molekulargewicht von mindestens 500,

B) 1 bis 60 Gew.-% Polyesterpolycarbonsäuren mit einem mittleren Molekulargewicht von 500 bis 5000 und einer Säurezahl von 30 bis 150 und

C) 10 bis 50 Gew.-% ethylenisch ungesättigten Monomeren, wobei 10 bis 50 Gew.-% der Monomeren Carboxylgruppen enthalten,

wobei die Summe von A), B) und C) 100 Gew.-% beträgt, der Peroxidinitiator in einem Anteil von mindestens 2,0 Gew.-%, bezogen auf das Gesamtgewicht der Monomeren, eingesetzt wird, das Bindemittel a) eine Säurezahl von 20 bis 150 aufweist und als Vernetzer b) Phenoplast- und/oder Aminoplastharze verwendet werden mit der Maßgabe, daß das Überzugsmittel

a) 30 bis 70 Gew.-% des Bindemittels a),

b) 2 bis 30 Gew.-%, bevorzugt 5 bis 16 Gew.-%, des Phenoplast- und/oder Aminoplastharzes b),

c) 1 bis 7 Gew.-%, bevorzugt 2 bis 5 Gew.-%, Ammoniak und/oder Amin als Neutralisationsmittel und

d) 20 bis 60 Gew.-% organische Lösungsmittel, wobei die Summe a), b), c) und d) 100 Gew.-% beträgt, enthält.

2. Überzugsmittel nach Anspruch 1, dadurch gekennzeichnet, daß mindestens 2,6 Gew.-%, besonders bevorzugt mindestens 3 Gew.-%, bezogen auf das Gesamtgewicht der ethylenisch ungesättigten Monomeren, Peroxidinitiatoren eingesetzt werden.

3. Überzugsmittel nach Anspruch 1 oder 2, dadurch gekennzeichnet, daß das Epoxidharz A) auf Bisphenol A basiert.

4. Überzugsmittel nach Anspruch 1 bis 3, dadurch gekennzeichnet, daß das Epoxidharz A) ein mittleres Molekulargewicht von mindestens 3000 hat.

5. Überzugsmittel nach Anspruch 1 bis 4, dadurch gekennzeichnet, daß die Polyesterpolycarbonsäuren B) ein mittleres Molekulargewicht von 1000 bis 3000 und eine Säurezahl von 50 bis 100 haben.

6. Überzugsmittel nach Anspruch 1 bis 5, dadurch gekennzeichnet, daß als Alkoholkomponente zur Herstellung der Polyesterpolycarbonsäuren B) Esterdiole und/oder Glycidylester von Monocarbonsäuren verwendet werden.

7. Überzugsmittel nach Anspruch 1 bis 6, dadurch gekennzeichnet, daß die ethylenisch ungesättigten Monomeren C) bestehen aus

x) 10 bis 50 Gew.-%, bevorzugt 20 bis 40 Gew.-%, Carboxylgruppen enthaltenden Monomeren,

y) 0 bis 50 Gew.-%, bevorzugt 20 bis 40 Gew.-%, nicht funktionalisierten Monomeren und

z) 5 bis 60 Gew.-%, bevorzugt 10 bis 50 Gew.-%, (Meth)acrylsäureestern mit 1 bis 20

## EP 0 256 521 B1

Kohlenstoffatomen im Alkoholrest, welche ggf. hydroxyfunktionell sind,
wobei die Summe von x), y) und z) 100 Gew.-% beträgt.

8. Überzugsmittel nach Anspruch 1 bis 7, dadurch gekennzeichnet, daß das Bindemittel a) erhältlich ist aus 35 bis 60 Gew.-% A), 10 bis 35 Gew.-% B) und 15 bis 30 Gew.-% C).

9. Überzugsmittel nach Anspruch 1 bis 8, dadurch gekennzeichnet, daß das verwendete Phenoplastharz vom Resoltyp ist, auf Bisphenol A basiert und mehr als eine Methylolgruppe je Phenylring enthält.

10. Überzugsmittel nach Anspruch 1 bis 9, dadurch gekennzeichnet, daß das Neutralisationsmittel c) Triethylamin oder Dimethylethanolamin ist.

11. Verfahren zur Herstellung der Überzugsmittel nach Anspruch 1 bis 10, dadurch gekennzeichnet, daß zunächst das Epoxidharz A) bei 80 bis 200°C, vorzugsweise bei 120 bis 180°C, unter Verwendung von Katalysatoren mit der Polyesterpolycarbonsäurekomponente B) umgesetzt wird, so daß mindestens 80% der anfänglich vorhandenen Oxiranringe geöffnet werden, anschließend in Gegenwart des im ersten Verfahrensschritt erhaltenen Reaktionsproduktes die Komponente C) bei 100 bis 160°C, bevorzugt bei 120 bis 140°C, unter Verwendung von mindestens 2 Gew.-%, bezogen auf das Gewicht der ethylenisch ungesättigten Monomeren, peroxidischer, bevorzugt Benzoyloxi- und/oder Phenylradikale liefernder Initiatoren polymerisiert wird, in einem dritten Verfahrensschritt das erhaltene Produkt mit der Komponente c) neutralisiert wird, das organische Lösungsmittel d), das Vernetzungsmittel b) sowie ggf. weitere übliche Zusatzstoffe zugemischt werden und das Überzugsmittel in Wasser dispergiert wird.

12. Verfahren nach Anspruch 11, dadurch gekennzeichnet, daß zunächst das Epoxidharz A) bei 80 bis 200°C, vorzugsweise bei 120 bis 180°C, unter Verwendung von Katalysatoren mit der Polyesterpolycarbonsäurekomponente B) umgesetzt wird, so daß mindestens 80% der anfänglich vorhandenen Oxiranringe geöffnet werden, anschließend in Gegenwart des im ersten Verfahrensschritt erhaltenen Reaktionsproduktes die Komponente C) bei 100 bis 160°C, bevorzugt bei 120 bis 140°C, unter Verwendung von mindestens 2 Gew.-%, bezogen auf das Gewicht der ethylenisch ungesättigten Monomeren, peroxidischer, bevorzugt Benzoyloxi- und/oder Phenylradikale liefernder Initiatoren polymerisiert wird, in einem dritten Verfahrensschritt das erhaltenen Produkt mit dem Vernetzungsmittel b) präkondensiert wird, anschließend die Neutralisation mit der Komponente c) erfolgt, das organische Lösungsmittel d) sowie ggf. weitere übliche Zusatzstoffe zugemischt werden und das Überzugsmittel in Wasser dispergiert wird.

13. Verfahren nach Anspruch 11 und 12, dadurch gekennzeichnet, daß nach der radikalischen Polymerisation weniger als 0,2 Gew.-%, bezogen auf die Summe von a) bis d), Restmonomere vorhanden sind.

14. Verfahren nach Anspruch 11, 12 und 13, dadurch gekennzeichnet, daß als Initiator Dibenzoylperoxid und/oder tert. Butylperbenzoat verwendet werden.

15. Verfahren nach Anspruch 11 bis 14, dadurch gekennzeichnet, daß die Komponente d) bereits als Lösungsmittel der als erster Verfahrensschritt erfolgenden Veresterung der Komponenten A) und B) eingesetzt wird.

16. Verwendung des wäßrigen Überzugsmittels nach Anspruch 1 bis 10 für die anodische Elektrotauchlackierung von Dosen und Dosenhalbteilen.

17. Verwendung des wäßrigen Überzugsmittels nach Anspruch 1 bis 10 für die Spritzlackierung von Dosen.

18. Verwendung nach Anspruch 16 und 17, dadurch gekennzeichnet, daß die Dosen aus Weißblech hergestellt sind.

19. Verwendung nach Anspruch 16 und 17, dadurch gekennzeichnet, daß die Dosen aus Aluminium bestehen.

20. Verwendung nach Anspruch 16 und 17, dadurch gekennzeichnet, daß die Dosen aus speziell oberflächenvorbehandeltem Stahlblech bestehen.

21. Verwendung nach Anspruch 16 bis 20, dadurch gekennzeichnet, daß die Dosen abgestreckt-teifgezogene zweiteilige Getränkedosen sind.

22. Verwendung nach Anspruch 16 bis 20, dadurch gekennzeichnet, daß die Dosen abgestreckt-tiefgezogene oder anderweitig tiefgezogene Konservendosen sind, die zur Haltbarmachung des Füllgutes einer Sterilisationsbelastung unterzogen werden.

23. Verwendung nach Anspruch 16, 18, 19 und 20, dadurch gekennzeichnet, daß es sich bei den Dosenhalbteilen um Rümpfe und Deckel handelt, die zur Herstellung von Konservendosen dienen.

24. Verwendung nach Anspruch 23, dadurch gekennzeichnet, daß die Rümpfe geschweißt und die Deckel als Aufreißdeckel vorliegen.

**Revendications**

1. Agent de revêtement aqueux, obtenu à partir d'une résine époxydique, de monomères à insaturation éthylénique en partie contenant des groupes carboxyle, d'un initiateur de type peroxyde, d'un agent réticulant, d'un agent de neutralisation, de solvants organiques de même que, le cas échéant, d'autres additifs usuels, tels que plastifiants, stabilisants, agents mouillants adjuvants de dispersion,

11

catalyseurs et pigments, caractérisé par le fait que l'agent de revêtement est à base d'un liant (a), lequel peut être obtenu à partir de:

(A) 20 à 80% en poids d'une résine époxydique ayant, en moyenne, plus d'un groupe époxyde par molécule et ayant une masse moléculaire moyenne d'au moins 500,

(B) 1 à 60% en poids de polyester-acides polycarboxyliques ayant une masse moléculaire moyenne de 500 à 5000 et un indice d'acide de 300 à 150; et

(C) 10 à 50% en poids de monomères à insaturation éthylénique, où 10 à 50% en poids des monomères contiennent des groupes carboxyle,

la somme de (A), (B) et (C) s'élevant à 100% en poids, l'initiateur de type peroxyde est utilisé dans une fraction d'au moins 2,0% en poids, par rapport au poids total des monomères, le liant (a) présente un indice d'acide allant de 20 à 150, et sont utilisées, comme réticulant (b), des résines phénoplastes et/ou aminoplastes, dans la mesure où l'agent de revêtement contient:

(a) 30 à 70% en poids du liant (a),

(b) 2 à 30% en poids, de préférence 5 à 16% en poids, de la résine phénoplaste et/ou aminoplaste (b),

(c) 1 à 7% en poids, de préférence, 2 à 5% en poids, d'ammoniaque et/ou d'amine comme agent de neutralisation, et

(d) 20 à 60% en poids de solvant organique,

la somme de (a), (b), (c) et (d) s'élevant à 100% en poids.

2. Agent de revêtement selon la revendication 1, caractérisé par le fait que sont utilisés au moins 2,6% en poids, de façon particulièrement préférée, au moins 3% en poids, par rapport au poids total des monomères à insaturation éthylénique, d'initiateurs de type peroxyde.

3. Agent de revêtement selon l'une des revendications 1 ou 2, caractérisé par le fait que la résine époxydique (A) est à base de bisphénol A.

4. Agent de revêtement selon l'une des revendications 1 à 3, caractérisé par le fait que la résine époxydique (A) a une masse moléculaire moyenne d'au moins 3000.

5. Agent de revêtement selon l'une des revendications 1 à 4, caractérisé par le fait que les polyesters-acides polycarboxyliques (B) ont une masse moléculaire moyenne de 1000 à 3000 et un indice d'acide de 50 à 100.

6. Agent de revêtement selon l'une des revendications 1 à 5, caractérisé par le fait que, comme composant alcool pour la fabrication des polyesters-acides polycarboxyliques (B), sont utilisés des esterdiols et/ou des esters glycidyliques d'acides monocarboxyliques.

7. Agent de revêtement selon l'une des revendications 1 à 6, caractérisé par le fait que les monomères à insaturation éthylénique (C) se composent de:

(x) 10 à 50% en poids, de préférence, 20 à 40% en poids, de monomères contenant des groupes carboxyle,

(y) 0 à 50% en poids, de préférence, 20 à 40% en poids de monomères non fonctionnalisés; et

(z) 5 à 60% en poids, de préférence, 10 à 50% en poids, d'esters d'acides (méth)acryliques ayant 1 à 20 atomes de carbone dans le reste alcool, lesquels sont, le cas échéant, à fontionnalité hydroxy,

la somme de (x), (y) et (z) s'élevant à 100% en poids.

8. Agent de revêtement selon l'une des revendications 1 à 7, caractérisé par le fait que le liant (a) peut être obtenu à partir de 35 à 60% en poids de (A), 10 à 35% en poids de (B) et 15 à 30% en poids de (C).

9. Agent de revêtement selon l'une des revendications 1 à 8, caractérisé par le fait que la résine phénoplaste utilisée est de type résol, qu'elle est à base de bisphénol A et contient plus d'un groupe méthylol par cycle phényle.

10. Agent de revêtement selon l'une des revendications 1 à 9, caractérisé par le fait que l'agent de neutralisation (c) est la triéthylamine ou la diméthyléthanolamine.

11. Procédé de fabrication de l'agent de revêtement tel que défini à l'une des revendications 1 à 10, caractérisé par le fait que l'on fait réagir tout d'abord la résine époxydique (A), à une température de 80 à 200°C, de préférence, à une température de 120 à 180°C, avec utilisation de catalyseurs, avec le composant polyester-acide polycarboxylique (B), de sorte qu'au moins 80% des cycles oxiranne présents au début soient ouverts, puis, en présence du produit de réaction obtenu à la première étape de procédé, on polymérise le composant (C), à une température de 100 à 160°C, de préférence, à une température de 120 à 140°C, avec utilisation d'au moins 2% en poids, par rapport au poids des monomères à insaturation éthylénique, d'initiateurs peroxydiques, fournissant, de préférence, des radicaux benzoyloxy et/ou phényle, dans une troisième étape de procédé, on neutralise le produit obtenu par le composant (c), on incorpore le solvant organique (d), l'agent réticulant (b), ainsi que, le cas échéant, d'autres additifs usuels, et on disperse l'agent de revêtement dans l'eau.

12. Procédé selon la revendication 11, caractérisé par le fait qu'on fait réagir tout d'abord la résine époxydique (A), à une température de 80 à 200°C, de préférence, à une température de 120 à 180°C, avec utilisation de catalyseurs, avec le composant polyester-acide polycarboxylique (B), de sorte qu'au moins 80% des cycles oxiranne présents au début soient ouverts, puis, en présence du produit de réaction obtenu à la première étape de procédé, on polymérise le composant (C), à une température de 100 à 160°C, de préférence, à une température de 120 à 140°C, avec utilisation d'au moins 2% en poids, par rapport au poids des monomères à insaturation éthylénique, d'initiateurs peroxydiques, fournissant, de préférence, des radicaux benzoyloxy et/ou phényle, dans une troisième étape de procédé, on précondense le produit obtenu avec l'agent réticulant (b), puis a lieu la neutralisation par le composant (c), on incorpore le solvant organique (d), ainsi que, le cas échéant, d'autres additifs usuels, et on disperse l'agent de revêtement dans l'eau.

13. Procédé selon l'une des revendications 11 et 12, caractérisé par le fait qu'après la polymérisation radicalaire, moins de 0,2% en poids, par rapport à la somme de (a) à (b), de monomères restants sont présents.

14. Procédé selon l'une des revendications 11, 12 et 13, caractérisé par le fait que l'on utilise, comme initiateur, le peroxyde de dibenzoyle, et/ou le perbenzoate de tert.-butyle.

15. Procédé selon l'une des revendications 11 à 14, caractérisé par le fait qu'on utilise le composant (d) déjà comme solvant de l'estérification des composants (A) et (B) ayant lieu en tant que première étape de procédé.

16. Utilisation de l'agent de revêtement aqueux tel que défini à l'une des revendications 1 à 10 pour le laquage par électrodéposition anodique de boîtes et de moitiés de boîtes.

17. Utilisation de l'agent de revêtement aqueux tel que défini à l'une des revendications 1 à 10 pour la laquage de boîtes par pulvérisation.

18. Utilisation selon l'une des revendications 16 et 17, caractérisée par le fait que les boîtes sont faites de fer blanc.

19. Utilisation selon l'une des revendications 16 et 17, caractérisée par le fait que les boîtes se composent d'aluminium.

20. Utilisation selon l'une des revendications 16 et 17, caractérisée par le fait que les boîtes se composent de fer blanc ayant été soumis à un prétraitement spécial de surface.

21. Utilisation selon l'une des revendications 16 à 20, caractérisée par le fait que les boîtes sont des boîtes de boissons en deux parties, obtenues par emboutissage-étirage.

22. Utilisation selon l'une des revendications 16 à 20, caractérisée par le fait que les boîtes sont des boîtes de conserves obtenues par emboutissage-étirage ou par un autre type d'emboutissage, lesquelles ont été soumises à une charge de stérilisation pour la conservation de la matière de remplissage.

23. Utilisation selon l'une des revendications 16, 18, 19 et 20, caractérisée par le fait qu'il s'agit, dans le cas des moitiés de boîtes, de corps et de couvercles, qui servent à la fabrication de boîtes de conserves.

24. Utilisation selon la revendication 23, caractérisée par le fait que les corps sont à l'état soudé et que les couvercles se présentent sous la forme de couvercles en fer blanc à ouverture facile.

### Claims

1. An aqueous coating agent, obtained from an epoxy resin, ethylenically unsaturated monomers, some of which contain carboxyl groups, a peroxide initiator, a crosslinking agent, a neutralizing agent, organic solvents, and, if appropriate, further conventional additives, such as plasticizers, stabilizers, wetting agents, dispersion auxiliaries, catalysts and pigments, wherein the coating agent is based on a binder a) which is obtainable from

A) 20 to 80% by weight of an epoxy resin having an average of more than one epoxy group per molecule and having an average molecular weight of at least 500,

B) 1 to 60% by weight of polyester polycarboxylic acids having an average molecular weight of 500 to 5,000 and having an acid number of 30 to 150, and

C) 10 to 50% by weight of ethylenically unsaturated monomers, 10 to 50% by weight of the monomers containing carboxyl groups,

where the sum of A), B) and C) is 100% by weight, the peroxide initiator is employed in a proportion of at least 2% by weight, relative to the total weight of the monomers, the binder a) has an acid number of 20 to 150, and the crosslinking agents b) used are phenolic and/or amino resins, with the proviso that the coating agent contains

a) 30 to 70% by weight of the binder a),

b) 2 to 30% by weight, preferably 5 to 16% by weight, of the phenolic and/or amino resin b),

c) 1 to 7% by weight, preferably 2 to 5% by weight, of ammonia and/or amine as neutralizing agent, and

d) 20 to 60% by weight of organic solvents,

where the sum of a), b), c) and d) is 100% by weight.

2. A coating agent as claimed in claim 1, wherein at least 2.6% by weight, particularly preferably at least 3% by weight, relative to the total weight of the ethylenically unsaturated monomers, of peroxide initiators are employed.

3. A coating agent as claimed in claim 1 or 2, wherein the epoxy resin A) is based on bisphenol A.

4. A coating agent as claimed in claim 1 to 3, wherein the epoxy resin A) has an average molecular weight of at least 3,000.

5. A coating agent as claimed in claim 1 to 4, wherein the polyester polycarboxylic acids B) have an average molecular weight of 1,000 to 3,000 and an acid number of 50 to 100.

6. A coating agent as claimed in claim 1 to 5, wherein the alcohol component used for the preparation of the polyester polycarboxylic acids B) is an ester diol and/or a glycidyl ester of a monocarboxylic acid.

7. A coating agent as claimed in claim 1 to 6, wherein the ethylenically unsaturated monomers C) comprise

x) 10 to 50% by weight, preferably 20 to 40% by weight, of monomers containing carboxyl groups,

y) 0 to 50% by weight, preferably 20 to 40% by weight, of nonfunctionalized monomers, and

z) 5 to 60% by weight, preferably 10 to 50% by weight, of (meth)acrylates having 1 to 20 carbon atoms in the alcohol radical and which are, if appropriate, hydroxy-functional,

where the sum of x), y) and z) is 100% by weight.

8. A coating agent as claimed in claim 1 to 7, wherein the binder a) is obtainable from 35 to 60% by weight of A), 10 to 35% by weight of B) and 15 to 30% by weight of C).

9. A coating agent as claimed in claim 1 to 8, wherein the phenolic resin used is of the resol type, is based on bisphenol A and contains more than one methylol group per phenyl ring.

10. A coating agent as claimed in claim 1 to 9, wherein the neutralizing agent c) is triethylamine or dimethylethanolamine.

11. A process for the preparation of the coating agent as claimed in claim 1 to 10, wherein the epoxy resin A) is initially reacted with the polyester polycarboxylic acid component B) at 80 to 200°C, preferably at 120 to 180°C, with the use of catalysts, so that at least 80% of the oxirane rings initially present are opened, component C) is subsequently polymerized in the presence of the reaction product obtained in the first process step, at 100 to 160°C, preferably at 120 to 140°C, with the use of at least 2% by weight, relative to the weight of the ethylenically unsaturated monomers, of peroxidic initiators, preferably ones which generate benzoyloxy and/or phenyl free radicals, the product obtained is neutralized in a third process step using component c), and the organic solvent d), the crosslinking agent b) and, if appropriate, further conventional additives are added and mixed, and the coating agent is dispersed in water.

12. The process as claimed in claim 11, wherein the epoxy resin A) is initially reacted with the polyester polycarboxylic acid component B) at 80 to 200°C, preferably at 120 to 180°C, with the use of catalysts, so that at least 80% of the oxirane rings initially present are opened, component C) is subsequently polymerized in the presence of the reaction product obtained in the first process step, at 100 to 160°C, preferably at 120 to 140°C, with the use of at least 2% by weight, relative to the weight of the ethylenically unsaturated monomers, of peroxidic initiators, preferably ones which generate benzoyloxy and/or phenyl free radicals, the product obtained is precondensed in a third process step with the crosslinking agent b), the neutralization using component c) is subsequently carried out, and the organic solvent d) and, if appropriate, further conventional additives are added and mixed, and the coating agent is dispersed in water.

13. The process as claimed in claim 11 and 12, wherein less than 0.2% by weight, relative to the sum of a) to d), of residual monomers are present after the free-radical polymerization.

14. The process as claimed in claim 11, 12 and 13, wherein the initiator used is dibenzoyl peroxide and/or tert.butyl perbenzoate.

15. The process as claimed in claim 11 to 14, wherein component d) is already used as solvent in the esterification, occurring as the first process step, of components A) and B).

16. The use of an aqueous coating agent as claimed in claim 1 to 10 for anodic electrocoating of cans and can halves.

17. The use of an aqueous coating agent as claimed in claim 1 to 10 for spray coating of cans.

18. The use as claimed in claim 16 and 17, wherein the cans are manufactured from tinplate.

19. The use as claimed in claim 16 and 17, wherein the cans comprise aluminum.

20. The use as claimed in claim 16 and 17, wherein the cans comprise specifically surface-pretreated steel sheeting.

21. The use as claimed in claim 16 to 20, wherein the cans are drawn and ironed, two-part drink cans.

22. The use as claimed in claim 16 to 20, wherein the cans are foodstuff cans which have been drawn and ironed or deep-drawn in another manner and which are subjected to sterilization for preservation of the contents.

23. The use as claimed in claim 16, 18, 19 and 20, wherein the can halves are bodies and lids which are used for the manufacture of foodstuff cans.

24. The use as claimed in claim 23, wherein the bodies are welded and the lids are pull-tab lids.